# EUROPEAN PATENT APPLICATION

(11) **EP 4 811 287 A1**
(43) Date of publication of application: **23.09.2026**
(21) Application number: 25305403.5
(22) Date of filing: 21.03.2025
(51) Int. Cl.: G06T 7/30, G06T 7/11

(54) **A COMPUTER-IMPLEMENTED METHOD FOR PAIRING ANATOMICAL ENTITIES OF AT LEAST ONE PATIENT ON MEDICAL IMAGES**

(71) Applicant: Guerbet, 93420 Villepinte (FR)
(72) Inventor: BÔNE, Alexandre, 75009 PARIS (FR); ROHÉ, Marc-Michel, 92120 MONTROUGE (FR); VÉTIL, REBECA, 75020 PARIS (FR); ABI-NADER, Clément, 75012 PARIS (FR)
(74) Representative: Plasseraud IP

(57) **Abstract**

The present document involves a computer-implemented method for pairing anatomical entities of at least one patient on medical images, the method comprising:
- obtaining (S1) at least a first medical image and a second medical image of an anatomical region of said patient, and
for each medical image:
o segmenting (S2) at least one anatomical reference entity of said medical image to generate a first segmentation map,
o segmenting (S3) at least one anatomical target entity of said medical image to generate a second segmentation map,
o computing (S4) a feature tensor respectively based on the first and second segmentation maps,
- computing (S5) a similarity matrix between the feature tensor of said first medical image and the feature tensor of said second medical image,
- characterizing (S6) the correspondence between anatomical entities of said first and second medical images, based on the similarity matrix.

## Description

### Technical Field

The present disclosure relates to a method for pairing anatomical entities of at least one patient on medical images.

### Background Art

Medical imaging plays a significant role in healthcare by utilizing various technologies to create visual representations of the interior of a body for clinical analysis and medical intervention. This field includes a range of imaging modalities, such as Computed Tomography (CT), Magnetic Resonance Imaging (MRI), and Positron Emission Tomography (PET), among others. These imaging techniques are vital for diagnosing and monitoring diseases, planning treatments, and conducting follow-up evaluations. They offer detailed images of organs, tissues, and lesions, allowing healthcare professionals to make informed decisions about patient care.

In the context of oncology, medical imaging plays an important role in the detection, diagnosis, treatment planning, and monitoring of cancer. The primary applicative goals in this field include the accurate identification and measurement of tumors, assessment of tumor progression or regression, and detection of new metastases. These goals are important for evaluating the effectiveness of treatment regimens and adjusting therapeutic strategies to improve patient outcomes. The ability to track changes in tumor size and location over time is important for personalized medicine, which aims to tailor treatments to individual patient needs.

Achieving these applicative goals is challenging due to several obstacles. A significant issue is the variability in patient anatomy and positioning during imaging sessions, which can lead to difficulties in accurately comparing images taken at different times. Additionally, traditional methods of image registration, which involve aligning two images to identify changes, are computationally intensive and prone to errors, and are not typically easily and readily applied to clinical practice.

Traditional image registration techniques are known to be used for aligning medical images for comparison. These methods typically involve complex algorithms that attempt to match anatomical structures between images taken at different times. For example such methods may include matching voxels via the estimation of dense displacement fields. However, these techniques often experience high computational costs and a significant risk of failure due to the variability in the image characteristics, such as varied field-of-views or varied signal noise structures. This situation can lead to inaccurate assessments of tumor changes and hinder timely clinical decision-making.

The specific problem addressed by the present document is the need for a more efficient and reliable method for pairing anatomical entities on medical images, for example in the contexts of cancer diagnosis or monitoring. Existing solutions are inadequate due to their computational demands and susceptibility to errors, which can compromise the accuracy of tumor tracking and the effectiveness of treatment plans. The described solution seeks to overcome these limitations by providing a streamlined approach that enhances the robustness and speed of anatomical entities pairing in medical imaging.

### Summary

To that aim, the present document proposes a computer-implemented method for pairing anatomical entities of at least one patient on medical images, the method comprising:
- obtaining at least a first medical image and a second medical image of an anatomical region of said patient, and
   for each medical image:
   ∘ segmenting at least one anatomical reference entity of said medical image to generate a first segmentation map,
   ∘ segmenting at least one anatomical target entity of said medical image to generate a second segmentation map,
   ∘ computing a feature tensor from the first and second segmentation maps,
- computing a similarity matrix between the feature tensor of said first medical image and the feature tensor of said second medical image,
- comparing and characterizing the correspondence between anatomical entities of said first and second medical images, based on the similarity matrix.

In the context of the present invention, it should be understood that the terms "a," "an," and "at least one" are used interchangeably unless otherwise specified. Specifically, the use of the term "a" or "an" does not limit the invention to a single element but should be interpreted as including the possibility of multiple elements, unless clearly indicated otherwise. Therefore, the term "at least one" also encompasses the situation where only one element is present.

A medical image may be defined as a visual representation of internal body structures or functions acquired using various imaging modalities. These images are generated using hardware and software systems that capture and process data, producing two-dimensional (2D) or three-dimensional (3D) images that aid in the diagnosis, treatment planning, and monitoring of various medical conditions. Medical images typically contain information about tissue density, composition, and function and are interpreted by radiologists, physicians, or other medical professionals with specialized training in image analysis. Such image is produced using modalities such as Computed Tomography (CT), Magnetic Resonance Imaging (MRI), and Positron Emission Tomography (PET), among others.

Pairing anatomical entities refers to the process of matching or determining the correspondences between anatomical structures, such as organs or lesions, between different medical images of the same patient or between patients. Pairing anatomical entities between different images of the same patient is typically done to track changes over time, such as tumor growth or regression, by comparing baseline images with follow-up images. The goal is to accurately identify corresponding anatomical features across different imaging sessions to assess disease progression or treatment response. Additionally, pairing anatomical entities between different images of different patients (inter-patiently) could provide clinical value by aiding surgeons in preparing for difficult surgeries. Specifically, in cases where a patient has a challenging lesion, the surgeon could access a database to identify similar cases. This information could help the surgeon better prepare for the complex procedure.

An anatomical region refers to a specific area or section of the body that is defined by its distinct anatomical features and structures. It encompasses various tissues, organs, and other anatomical entities within a particular boundary, often used in medical imaging and clinical analysis to focus on specific parts of the body for diagnosis, treatment, or research purposes. Said anatomical region may encompass for example the thorax, the abdomen and the pelvis of a patient.

Segmenting refers to the process of partitioning a digital image into multiple segments or regions to simplify its representation and make it more meaningful for analysis. This process involves identifying and delineating anatomical structures, such as organs or lesions, within the image, often using algorithms or deep learning techniques like U-net, to generate segmentation maps that highlight specific areas of interest for further clinical evaluation or treatment planning.

A segmentation map is a digital representation that delineates different regions or structures within an image, such as organs or lesions. It is generated through the process of segmentation, which involves partitioning an image into multiple segments to simplify its analysis and highlight specific areas of interest. Segmentation maps are often used to assist in clinical evaluations, treatment planning, and monitoring disease progression by providing a clear visual distinction between various anatomical entities. They can also be utilized to derive useful geometrical features such as the volume or the diameter of the corresponding anatomical entity, as well as histogram-based statistics and texture patterns that may help the clinical characterization.

An anatomical reference entity refers to a specific anatomical structure within a medical image that serves as a point of reference for analysis or comparison. This entity can be an organ, bone, or implant, and is used to help identify and align other anatomical features or lesions within the same or different images, facilitating accurate tracking and assessment of changes over time.

An anatomical target entity refers to a specific anatomical structure or feature within a medical image that is the focus of analysis or treatment. This entity can be a lesion, tumor, or any other area of interest that needs to be identified, segmented, and tracked over time to assess changes, such as growth or regression, particularly in the context of disease monitoring or treatment evaluation.

A feature tensor is a multi-dimensional array that represents various attributes or characteristics of data, often used in the context of machine learning and image processing. In medical imaging, a feature tensor can encapsulate information such as the position, volume, and spatial relationships of anatomical entities, allowing for the comparison and analysis of these features across different images. This structured representation facilitates the processing and analysis of complex data by providing a comprehensive and organized format for feature extraction and comparison.

A similarity matrix is a mathematical representation used to quantify the similarity between lists of data points, objects, or entities. Each element in the matrix represents a similarity score, which is typically calculated using a specific metric or algorithm, such as Euclidean distance, cosine similarity, or other statistical measures. In the context of medical imaging, a similarity matrix can be used to compare features extracted from different images to identify corresponding anatomical entities or changes over time.

Characterizing the correspondence between anatomical entities refers to the process of analyzing and identifying the relationships or matches between anatomical structures. This involves evaluating the similarities and differences between these structures across images to determine how they correspond to each other, which is useful for tracking changes over time. In one example, characterizing the correspondence between anatomical entities may include transforming their similarity matrix into a pre-determined format, such as, for example, a binary matrix.

Such method provides a systematic approach for pairing anatomical entities on medical images, which enhances the accuracy and efficiency of lesion monitoring, for example. By obtaining at least a first and a second medical image of an anatomical region and segmenting anatomical reference and target entities to generate segmentation maps, the method allows for precise identification and delineation of anatomical structures. From this segmentation are generated feature tensors, which encapsulate detailed attributes of the anatomical entities and in particular relative positioning information of the target entities with respect to the reference entities, facilitating a robust comparison between images. Segmenting the first and second images reduces the computational complexity compared to traditional image registration methods, which often require aligning entire images and are prone to errors due to anatomical variability and patient movement.

The computation of a similarity matrix between the feature tensors of the first and second medical images enables a quantitative assessment of the correspondence between anatomical entities. This matrix serves as a foundation for associating the anatomical entities, and in turn allowing for accurate tracking of changes over time, such as tumor growth or regression.

By focusing on the relative positioning of anatomical entities in each image to derive feature tensors and ultimately the similarity matrix, the method provides a more reliable and faster solution for lesion pairing, which is particularly beneficial in clinical settings where timely and accurate assessments are important for patient care. This approach not only improves the robustness of lesion pairing and the computational complexity but also supports personalized medicine by enabling tailored treatment strategies based on precise monitoring of disease progression.

The anatomical reference entity and segmenting the anatomical lesion may be performed using a U-net, more particularly a nnU-net.

The machine learning model may be a U-Net.

A U-Net is a convolutional neural network (CNN) architecture introduced by the article "Olaf Ronneberger et al., U-Net: Convolutional Networks for Biomedical Image Segmentation, arXiv:1505.04597".

The U-Net architecture is characterized by its U-shaped architecture, which consists of an encoder (contracting or downsampling path) and a decoder (expansive path). A key innovation of the U-Net architecture is the use of skip connections, also known as residual connections. These connections allow the decoder to combine high-level semantic information with detailed spatial information from the encoder.

Said medical images may be Computed Tomography images, more particularly TAP CT images or Thorax, Abdomen, and Pelvis Computed Tomography (CT) images.

The first image may be a baseline image and the second image may be a follow-up image.

The anatomical reference entity may be an organ, a bone or an implant.

The anatomical target entity may be a lesion or a tumor.

Each medical image may be preprocessed to standardize voxel spacing, intensity normalization, or alignment across images, before segmenting said anatomical entities.

Each anatomical target entity may be localized by encoding its relative position with respect to a list of anatomical reference entities, before computing said feature tensor. For instance, the feature tensor may be composed of the Euclidean distances of the target entity to all reference entities. The similarity matrix may be composed of the Euclidean distances between the positions of the target entities of the second medical image and the expected positions of the target entities of the first image in the second image, or vice-versa, or any combination of these two approaches. Computing the expected positions of target entities may consist in identifying the minimum of a scalar field defined as the mean square error between the original and the local feature tensors. If the feature tensors consist in Euclidean distances to reference entities, the mean square error function may be weighted by uncertainty coefficients associated to each reference entity or to the magnitude of the Euclidean distances.

Normalization may be applied to adjust the similarity measures between feature tensors based on the average displacement of anatomical reference entities between images, before computing the similarity matrix.

The step of characterizing the correspondence between anatomical entities of said first and second medical images may comprise performing lesion pairing optimization by solving a linear assignment problem using integer linear programming to establish correspondences between target entities in the first and second medical images. It may also consist in iteratively identifying the maximum of the similarity matrix and removing the corresponding row and column, up to a minimum similarity level.

The step of characterizing the correspondence between anatomical entities of said first and second medical images may comprise validating the lesion pairings by assessing confidence levels, anatomical or spatial consistency, or volumetric changes. Uncertain or erroneous correspondences may be filtered out.

The first medical image may be a medical image of a first patient and the second medical image may be a medical image of a second patient.

The method may also comprise generating an output report comprising the final lesion pairing results, highlighting matched target entities, new target entities, or disappeared target entities.

More particularly, the method may comprise at least part of the following features.

### Image Acquisition & Preprocessing

According to the above-mentioned method, a first medical image and a second medical image of an anatomical region of the patient are obtained.

These images may be typically acquired using medical imaging modalities such as Computed Tomography (CT), Magnetic Resonance Imaging (MRI), or Positron Emission Tomography (PET). In longitudinal imaging, consistency between acquisitions is preferred to favor accurate lesion tracking. Therefore, both baseline and follow-up scans are preferably obtained using the same imaging modality, scanner type, and acquisition protocol. Variability in patient positioning, scanner calibration, breathing motion, and inter-scan differences may introduce discrepancies that affect subsequent processing.

To minimize variations and standardize the images for analysis, a series of preprocessing operations may be performed. First, intensity standardization may be applied to ensure that pixel or voxel intensity values remain consistent across different acquisitions. In the case of CT images, intensity values may be converted to Hounsfield Units (HU) to provide a standardized representation of tissue densities. Additionally, histogram matching techniques may be used to align intensity distributions between baseline and follow-up images.

Next, the images may undergo resampling to a pre-determined voxel spacing. Since medical images may be acquired with different resolutions, interpolation techniques such as linear or cubic interpolation may be applied to standardize the voxel size across scans. This step ensures that lesions and anatomical structures maintain consistent spatial representation across patients, image acquisition protocols, and time.

Noise reduction techniques may be applied to enhance image quality. Medical images may contain noise due to scanner artifacts or low-dose acquisition settings. To address this, filtering techniques such as Gaussian smoothing or median filtering may be used to reduce noise while preserving anatomical details.

The preprocessing step may include the selection of a region of interest (ROI) to focus analysis on relevant anatomical areas. In cases where full-body scans are acquired, cropping techniques may be applied to isolate the anatomical region of interest, such as the thorax, abdomen, or pelvis. This reduces computational complexity and improves processing efficiency.

**.**

Upon completion of preprocessing, the medical images may be standardized in terms of intensity, resolution, and alignment, with noise artifacts minimized and anatomical structures properly registered. These images may serve as the foundation for subsequent segmentation and feature extraction, ensuring that variations introduced during acquisition do not compromise the accuracy of the method.

### Segmentation of anatomical entities

After image acquisition and optional preprocessing, the method may proceed with the segmentation of anatomical entities or structures within the medical images. This step aims to isolate relevant anatomical reference entities, such as organs, bones or implants, as well as anatomical target entities, such as lesions or tumors. The segmentation process may be performed using a deep learning-based model to ensure high accuracy and robustness, even in cases of anatomical variability or imaging noise.

The segmentation of anatomical entities may be conducted using a pre-trained nnU-Net, a state-of-the-art deep learning framework for medical image segmentation. Unlike traditional segmentation models that require extensive manual tuning, nnU-Net is a self-configuring deep learning approach that automatically adapts to the characteristics of the dataset. This allows the model to adjust hyperparameters, preprocessing steps, and training configurations based on the properties of the input images, ensuring optimal segmentation performance across different imaging modalities.

The segmentation process begins with the application of a convolutional neural network (CNN) architecture designed to extract hierarchical features from medical images. The model utilizes an encoder-decoder structure, where the encoder extracts spatial and texture information at multiple resolutions, and the decoder reconstructs a pixel-wise segmentation map. To improve accuracy, skip connections are employed to retain fine-grained anatomical details, ensuring precise boundary delineation of organs and lesions. Additionally, multi-scale processing is incorporated to enhance the detection of both small and large structures.

Segmentation may be performed separately for anatomical reference entities and anatomical target entities. Anatomical reference entities, such as the liver, kidneys, vertebrae, and major blood vessels, may be segmented to provide spatial landmarks that assist in lesion localization and longitudinal tracking. Anatomical target entities, such as tumors or lesions, may be segmented independently to allow for accurate feature extraction and lesion matching.

Segmentation may be performed using two different machine learning models, i.e. one model that segments reference entities, and another one that segments target entities. Each machine learning may be pretrained separately.

To further improve segmentation accuracy, the model may apply a patch-based inference strategy with overlapping tiles. This technique processes the image in smaller sub-regions to reduce memory requirements that may arise from global segmentation while preventing edge artifacts. The overlapping patches ensure that segmentation predictions remain smooth and continuous across image boundaries.

Following the initial segmentation, post-processing techniques may be applied to refine the segmentation maps. Morphological operations, such as erosion and dilation, may help eliminate small artifacts and enhance the continuity of segmented structures. Connected component analysis may be used to identify and filter out false positives, ensuring that only clinically relevant regions are retained. If multiple structures are detected, a labeling step may assign unique identifiers to each segmented entity, allowing for precise lesion tracking in subsequent steps.

The output of this step may consist of two segmentation maps per medical image: one containing the anatomical reference entities and another containing the anatomical target entities. These segmentation maps may serve as the foundation for feature extraction, lesion localization, and similarity computation in later steps of the method. By leveraging an advanced deep learning-based segmentation model, the method ensures accurate delineation of anatomical structures, facilitating reliable lesion pairing and longitudinal analysis.

### Target Entities Localization

Once the anatomical reference entities and target entities have been segmented, the method proceeds with the localization of target entities. This step involves determining the anatomical reference entity to which each target entity belongs. Accurate localization is useful for ensuring that target entities are correctly assigned to their anatomical context, enabling reliable tracking and comparison across different medical images. As mentioned above, the localization process is particularly important in longitudinal imaging, where variations in patient positioning, anatomical shifts, and changes in target entity morphology can introduce challenges in direct comparison between baseline and follow-up scans.

Target entity localization is performed using one or more of the following techniques: centroid-based localization, overlap-based localization, and majority voting localization. Each method provides a different approach to associating target entities with reference entities, ensuring robustness across different anatomical regions.

Centroid-Based Localization determines the location of a target entity by computing its geometric centroid and assigning it to the nearest anatomical reference entity. The centroid is calculated as the average of the voxel coordinates belonging to the segmented target entity. If the centroid falls within the segmentation map of a specific reference entity, the target entity is assigned to that reference entity. If the centroid is located in an ambiguous region, such as the boundary between two reference entities, additional distance-based heuristics may be applied to determine the most probable assignment.

Overlap-Based Localization assigns a target entity to the anatomical reference entity with which it has the highest spatial overlap. This method computes the Dice similarity coefficient or Intersection over Union (IoU) between the segmentation mask of the target entity and each reference entity. The reference entity with the highest overlap score is designated as the target entity's location. To ensure robust assignments, a predefined threshold may be applied, requiring a minimum overlap percentage for a reference entity to be considered as the primary anatomical association.

Majority Voting Localization refines the assignment of target entities by considering the distribution of reference entity labels within a spatial neighborhood. Instead of relying solely on the centroid or overlap metrics, this method evaluates all voxels within the target entity segmentation and assigns it to the reference entity label that appears most frequently within it. This approach enhances robustness in cases where target entities extend across multiple reference entities or when segmentation inconsistencies occur.

The localization of target entities ensures that they are correctly associated with anatomical reference entities before feature extraction and lesion pairing. By integrating multiple localization strategies, the method improves the reliability of tracking and correspondence analysis in longitudinal imaging, minimizing errors introduced by spatial variations and anatomical shifts. The localization results may be stored alongside the segmented target entity data, serving as key inputs for subsequent processing steps.

### Feature Extraction and Encoding

The method may then proceed with feature extraction and encoding to generate a structured numerical representation of each target entity. This step quantifies the characteristics of target entities and their spatial relationships with anatomical reference entities, enabling accurate comparison and pairing between baseline and follow-up medical images. By extracting and encoding relevant features, the method ensures that target entities are described in a way that facilitates reliable similarity computation and lesion tracking.

Feature extraction may involve computing a set of attributes that describe the target entities in terms of geometry, spatial positioning, and intensity-based properties. These attributes are then encoded into a feature tensor, which serves as the input for subsequent similarity computation and lesion pairing steps. The extracted features can be categorized into three main types: geometric features, spatial relationship features, and intensity-based features.

Geometric features describe the shape and size of each target entity. The volume of the target entity may be computed by counting the number of voxels within its segmentation mask and converting this value into physical units based on voxel spacing. Additional shape descriptors such as sphericity, elongation, and compactness may be extracted to characterize the morphological properties of the target entity. The dimensions of the smallest bounding box enclosing the target entity may also be recorded to provide an estimate of its spatial extent.

Spatial relationship features define the position of a target entity in relation to anatomical reference entities. The centroid coordinates of each target entity may be computed in world coordinates to ensure consistency across scans. The Euclidean distance between the centroid of the target entity and the centroids of various anatomical reference entities may be calculated, providing a quantitative measure of spatial relationships. To encode more advanced spatial relationships beyond Euclidean distances while maintaining robustness against variations in patient positioning, the method may also apply a relative position encoding, in which the absolute position of the target entity is transformed into a reference frame defined by anatomical reference entities. This ensures that comparisons between target entities remain anatomically meaningful even when global shifts occur between imaging sessions.

In imaging modalities where voxel intensity carries diagnostic significance, such as CT or MRI, intensity-based features may also be extracted. The mean and standard deviation of intensity values within the segmented target entity may be computed to provide insight into its tissue composition. Additionally, histogram-based features that capture the distribution of intensity values within the target entity may be included to enhance lesion characterization. These features may be particularly useful for detecting changes in lesion structure and composition over time.

Once extracted, the features may be structured into a feature tensor, a multi-dimensional numerical representation that encapsulates all relevant properties of the target entity. This feature tensor may provide a standardized and comprehensive representation of each target entity, facilitating accurate and efficient lesion matching. By integrating both geometric and spatial relationship features, the method may ensure that target entities are not only compared based on their individual attributes but also in the context of their surrounding anatomical structures. This step may enhance the robustness of longitudinal lesion pairing, ensuring that feature-based comparisons remain reliable across different imaging sessions.

### Expected positions of target entities of the first image in the second image.

To facilitate the subsequent computation a of similarity matrix, the expected positions of target entities of the first image in the second image, or vice-versa, or a combination of the two, may be estimated by identify the position in the second image that would best reproduce the original feature tensor computed in the first image. This estimation may be performed for each target entity by minimizing a mean error scalar field between the original and the local feature tensor.

To ensure accurate estimation of the expected position, the mean error scalar field may be weighted by uncertainty coefficients. These processes may compensate for variations in patient positioning, organ motion, and anatomical changes between baseline and follow-up medical images.

Uncertainty coefficients may be used to normalize each component of the mean error scalar field, and may be defined according to multiple strategies, including leave-one-out cross-validation, organ-based normalization, or rescaling. In normalization based on leave-one-out cross-validation, a modified mean error scalar field where the error term corresponding to a given feature tensor coordinate was removed is minimized without weighting, and this missing error term is then computed for the obtained solution and used as a normalization factor for a subsequent weighted mean error scalar field minimization. This approach allows to accurately estimate the uncertainty associated to each component of the mean error scalar field but is computationally expensive. In organ-based normalization, or normalization based on reference entities, the spatial positioning terms in the mean error scalar field are normalized for each reference entity by the difference in its spatial positioning to the reference entity where the current target entity was localized between the first and the second image. This approach is well-suited to normalize spatial positioning terms and is computationally inexpensive. In rescaling-based normalization, each component of the mean error scalar field is normalized by the magnitude of the corresponding feature tensor value of the target entity in the first image. This approach is also computationally inexpensive and simply encodes that larger terms also carry larger uncertainty.

Upon completion of mean error scalar field minimization, possibly weighted, target entities expected positions in the other image are estimated. The estimated target entity positions may be stored alongside their extracted feature tensors, serving as key inputs for the subsequent similarity computation and lesion pairing steps.

### Computation of Similarity Matrix

The method may then proceed with computing a similarity matrix to quantify the correspondence between target entities across baseline and follow-up medical images.

The similarity matrix may be constructed by performing pairwise comparisons between the feature tensors of target entities extracted from the baseline and follow-up medical images. Each target entity in the baseline image may be compared with each target entity in the follow-up image, generating a similarity score that reflects the degree of correspondence between them. These similarity scores may be computed based on a combination of geometric, spatial, and intensity-based features, ensuring that lesion comparisons are robust and biologically meaningful.

Several similarity metrics may be used depending on the nature of the feature tensors and the imaging modality. Euclidean distance is a commonly used metric for comparing spatial features, as it quantifies the absolute positional difference between target entities. Cosine similarity is often employed for high-dimensional feature tensors, as it measures the angular similarity between feature vectors, providing a scale-invariant measure of correspondence. In cases where target entities exhibit complex shape changes, Hausdorff distance may be used to evaluate morphological differences. For intensity-based features, statistical correlation metrics such as Pearson or Spearman correlation coefficients may be applied to assess similarity in voxel intensity distributions.

To improve robustness, similarity computation may also incorporate weighted feature fusion, where different feature categories (e.g., spatial distance, shape descriptors, intensity distributions) are assigned different importance levels based on clinical relevance. This ensures that the similarity matrix is not overly influenced by a single feature type and accounts for variations in lesion characteristics across different anatomical regions.

A particular implementation of the similarity matrix computation may consist in computing the Euclidean distances between positions of the target entities in the second image, and the expected positions of the target entities of the first image in the second image.

The similarity matrix may be normalized to correct for inter-organ and inter-patient variability and facilitate its subsequent analysis for lesion pairing. Normalization may be based on the same uncertainty coefficients that were computed when estimating the expected positions of target entities, or on extrinsic parameters such as the number of days elapsed between the first and the second image.

Once all pairwise comparisons have been performed, the resulting similarity matrix encodes the degree of similarity between each pair of target entities across the two medical images. The matrix structure allows for efficient retrieval of the most probable correspondences, as well as detection of new or missing target entities based on low similarity scores. The computed similarity matrix may then be used in the next step to optimize lesion pairing and establish longitudinal correspondences between target entities in the baseline and follow-up scans.

### Lesion Pairing

Once the similarity matrix has been computed, the method may proceed with lesion pairing, which involves establishing correspondences between target entities in the baseline and follow-up medical images. This step ensures that each target entity from the follow-up scan is either matched to a corresponding target entity in the baseline scan or classified as a new or disappeared lesion, for example. To achieve optimal pairing, the method may formulate the problem as a linear assignment problem (LAP) and may solve it using integer linear programming (ILP).

In addition to new and disappeared lesions, the method may account for complex morphological changes, such as lesion splitting and merging. Lesion splitting occurs when a single lesion in the baseline image is divided into multiple smaller lesions in the follow-up image. Conversely, lesion merging refers to the fusion of multiple lesions from the baseline image into a single lesion in the follow-up image.

Lesion pairing may be performed by optimizing an objective function that minimizes the overall cost of assigning target entities from the baseline image to those in the follow-up image. The cost function may be derived from the similarity matrix, where each element represents the dissimilarity between a pair of target entities. The goal is to minimize the total cost while ensuring that the pairings satisfy predefined constraints. The decision variables in this optimization process determine whether a given target entity from the baseline image is assigned to a target entity in the follow-up image.

The lesion pairing process may be subject to the following constraints: each target entity in the baseline image can be assigned to at most one target entity in the follow-up image, and each target entity in the follow-up image can be assigned to at most one target entity in the baseline image. This ensures that lesions are matched in a one-to-one manner, preventing duplicate pairings. Additionally, a threshold constraint may be applied to prevent assignments when the similarity score between two target entities is too low, reducing the likelihood of incorrect correspondences. Target entities that do not meet the matching criteria may be classified as new lesions (present in follow-up but not in baseline) or disappeared lesions (present in baseline but absent in follow-up). The threshold constraint may be adapted to the reference entity where the considered target entity was localized.

The optimization problem may be solved using integer linear programming (ILP), which finds the best set of correspondences while satisfying the defined constraints. The method may employ PuLP, a Python-based optimization library, to implement and solve the ILP model. PuLP provides an efficient framework for defining the decision variables, constraints, and objective function, and uses solvers such as CBC (Coin-or Branch and Cut) or GLPK (GNU Linear Programming Kit) to compute the optimal pairing configuration.

By formulating the lesion pairing process as a constrained optimization problem, the method may ensure that the most biologically and anatomically plausible correspondences are established. Unlike heuristic or nearest-neighbor approaches, which rely solely on spatial proximity, this optimization-based strategy considers a comprehensive set of lesion characteristics, including geometric, spatial, and intensity-based features. This allows for more accurate, consistent, and clinically meaningful lesion tracking, even in cases where lesions undergo slight changes in position, shape, or intensity over time.

Alternative strategies may also be employed, such as simple thresholding, or iterative thresholding. These alternative strategies may require less computational ressources. In simple thresholding, the similarity matrix is thresholded, thus defining clusters of corresponding lesions. This approach allows for merging and splitting scenarios. In iterative thresholding, until the maximum element of the similarity matrix is smaller than a given threshold, the two following steps are iterated: pair the two target entity with maximum similarity, then remove the corresponding row and column from the similarity matrix. This approach does not allow for merging and splitting scenarios.

At the conclusion of this step, each target entity in the follow-up image may be either assigned to a corresponding target entity in the baseline image, classified as a new lesion, or identified as a disappeared lesion, for example. The resulting lesion pairings may then be validated and refined in the next step to further enhance the robustness of the lesion tracking process.

### Validation & Post-Processing

After lesion pairing has been performed, the method may proceed with validation and post-processing to ensure the accuracy and reliability of the established correspondences. This step refines lesion pairings, filtering out uncertain matches, and identifying new or disappeared target entities with high confidence. By incorporating validation mechanisms, the method may minimize errors and may enhance the robustness of longitudinal lesion tracking.

The validation process may begin by assessing the confidence level of each lesion pairing. Confidence scores are derived from the similarity matrix, considering both the raw similarity values and the optimization-based pairing results. If a pairing has a low similarity score or does not meet a predefined confidence threshold, it may be flagged for further review. In such cases, additional verification techniques, such as spatial consistency checks and temporal progression modeling, may be applied to confirm or reject the pairing.

To further validate lesion correspondences, the method may examine the spatial coherence of matched target entities. For each paired lesion, the relative displacement between its baseline and follow-up positions is analyzed to ensure that the movement is anatomically plausible. If a lesion appears to have shifted by an abnormally large distance or is assigned to a significantly different anatomical reference entity, the pairing may be considered incorrect and re-evaluated. Similarly, volumetric changes may be assessed to determine whether variations in lesion size between timepoints fall within expected biological limits.

New and disappeared target entities may also be validated to ensure that their classification is not due to segmentation inconsistencies or imaging artifacts. New lesions may be confirmed by verifying that no corresponding target entity with a sufficiently high similarity score exists in the baseline image. Disappeared lesions may be validated by ensuring that the absence of a match in the follow-up image is not due to segmentation errors or misalignment. If necessary, a secondary check can be performed using intensity-based criteria or anatomical priors to determine whether a lesion has actually resolved or if it has been misclassified.

To validate lesion splitting and merging, the method examines the spatial and morphological consistency of lesions across imaging sessions. For splitting, the combined volumes of the new lesions are compared with the volume of the original lesion to ensure consistency. For merging, the spatial overlap and cumulative volume of the merged lesions are analyzed to confirm the event. These validations minimize errors and enhance the robustness of lesion pairing.

Post-processing techniques may be applied to refine the final lesion tracking results. These may include smoothing of displacement trajectories to improve the continuity of lesion movement across timepoints, as well as correction of minor registration errors that could affect lesion matching. Additionally, a final quality assessment step may be included, where flagged correspondences may be reviewed and either confirmed or discarded based on predefined criteria.

At the conclusion of this step, the lesion pairing results may be finalized, with high-confidence correspondences retained and uncertain matches either refined or discarded. This ensures that only the most reliable lesion tracking results are used for clinical interpretation and decision-making in the final output stage.

### Output for Clinical Interpretation

The final step of the method may involve generating the output of the lesion pairing process and providing clinically meaningful interpretations of the results. This step may ensure that the processed data is transformed into a format that can be easily analyzed by clinicians, enabling effective monitoring of disease progression, treatment response, and decision-making in patient management.

The output may consist of a structured report summarizing the lesion correspondences between the baseline and follow-up medical images. For each matched target entity, the report may include its spatial location, volume, and relevant morphological features, along with any observed changes between timepoints. If a target entity has undergone significant growth, shrinkage, or shape alteration, these changes are quantified and highlighted for clinical review. Additionally, new target entities detected in the follow-up scan may be listed separately, along with their anatomical reference entities and estimated characteristics. Similarly, disappeared target entities from the baseline scan may be identified, providing information about potential treatment response or lesion resolution.

The output may also include detailed annotations for splitting and merging events, allowing clinicians to track complex morphological changes. These annotations may be accompanied by visual overlays indicating the original lesion and its corresponding parts in the follow-up scan.

To facilitate visualization, the method may generate annotated medical images where the paired target entities are displayed using color-coded overlays. These overlays may help clinicians quickly identify lesion correspondences and assess changes in morphology or position. Graphical representations such as lesion growth charts, volumetric change curves, and spatial displacement maps may also be included to provide a more comprehensive view of lesion evolution over time. In some implementations, an interactive interface may allow clinicians to review lesion tracking results dynamically, enabling manual validation or adjustment of pairings if needed.

The final output can be integrated into clinical workflows through various formats, including standardized reports, DICOM annotations, or structured electronic health record (EHR) data. This ensures that the results are compatible with existing medical imaging systems and can be readily accessed by radiologists, oncologists, and other healthcare professionals.

The present document also proposes a computer program product, comprising instructions which, when executed by a processor, cause the processor to implement the method according to the present document.

The present document also proposes a computer device comprising:
- an input interface to receive medical images,
- a memory for storing at least instructions of a computer program according to the present document,
- a processor accessing the memory for reading the aforesaid instructions and executing then the method according to the present document,
- an output interface to provide information concerning the comparison and the characterization of the anatomical lesions.

The input interface may be responsible for receiving medical images from various sources, ensuring compatibility with different imaging systems. The interface may support multiple data acquisition methods, including direct retrieval from hospital Picture Archiving and Communication Systems (PACS) through the Digital Imaging and Communications in Medicine (DICOM) standard. Alternatively, medical images may be uploaded from local or network storage in standard formats such as NIfTI (.nii, .nii.gz) or DICOM (.dcm). The input interface may also support real-time streaming of imaging data from connected imaging devices such as CT, MRI, or PET scanners.

The memory component may store the necessary instructions for executing the lesion pairing method and retains intermediate and final results. The memory may include both short-term and long-term storage capabilities. Random Access Memory (RAM) may be used for temporary storage of processed images, segmentation maps, feature tensors, similarity matrices, and lesion pairing results during execution. Persistent storage, such as solid-state drives (SSD) or hard disk drives (HDD), may be used to store the computer program instructions, pre-trained deep learning models, configuration files, and processed lesion tracking data. A structured database may be incorporated to archive lesion tracking results, enabling retrieval for longitudinal studies. If the device includes hardware acceleration for deep learning-based segmentation, such as Graphics Processing Units (GPU) or Tensor Processing Units (TPU), the memory module may include dedicated Video RAM (VRAM) optimized for high-performance parallel computation.

The processor executes the method for lesion pairing by accessing the memory, reading the program instructions, and performing computations on the medical images. It may be responsible for executing key processing steps, including deep learning-based segmentation, feature extraction, similarity matrix computation, and lesion pairing optimization. The processing unit may include a Central Processing Unit (CPU) to handle general computational tasks, while a Graphics Processing Unit (GPU) or specialized Al accelerator may be leveraged to enhance performance for deep learning-based segmentation using models such as InferenceNNunetV2. Multi-core parallel processing capabilities may enable different stages of the method to run concurrently, improving efficiency. If deployed in a high-performance computing environment, the processor may utilize specialized Al hardware such as NVIDIA Tensor Cores or Google TPUs to accelerate inference and optimization-based lesion pairing.

The output interface may provide information concerning the comparison and characterization of anatomical target entities. The output can be presented in multiple formats to ensure effective clinical interpretation. The device may generate structured reports summarizing lesion correspondences, volumetric changes, and spatial displacement, highlighting any new or disappeared lesions between baseline and follow-up scans. These reports may be exported in standardized formats such as HL7 CDA (Clinical Document Architecture) or FHIR (Fast Healthcare Interoperability Resources) for integration into electronic health record (EHR) systems. To enhance visualization, the device may overlay segmentation maps and lesion tracking results on medical images, displaying color-coded annotations that highlight matched, new, and disappeared lesions. These visualizations can be presented within an interactive graphical interface, allowing clinicians to manually review and adjust lesion pairings, view similarity scores, and filter tracking results based on confidence thresholds. The device may also include a DICOM output module, allowing processed images to be sent back to a PACS system for further clinical evaluation. Additionally, an application programming interface (API) may be provided to facilitate interoperability with third-party medical imaging applications and Al-driven decision support systems.

The present document also proposes a computer-readable non-transient recording medium on which a software is registered to implement at least one of the above-mentioned methods, when the software is executed by a processor.

### Brief Description of Drawings

Other features, details and advantages will be shown in the following detailed description and on the figures, on which:
- Figure 1 schematically shows an example of a computer device according to the present document,
- Figure 2 illustrates a flow-chart of a generic method according to the present document,
- Figure 3 illustrates an embodiment of said method,
- Figure 4 illustrates the lesion correspondence analysis between two imaging time points.

### Description

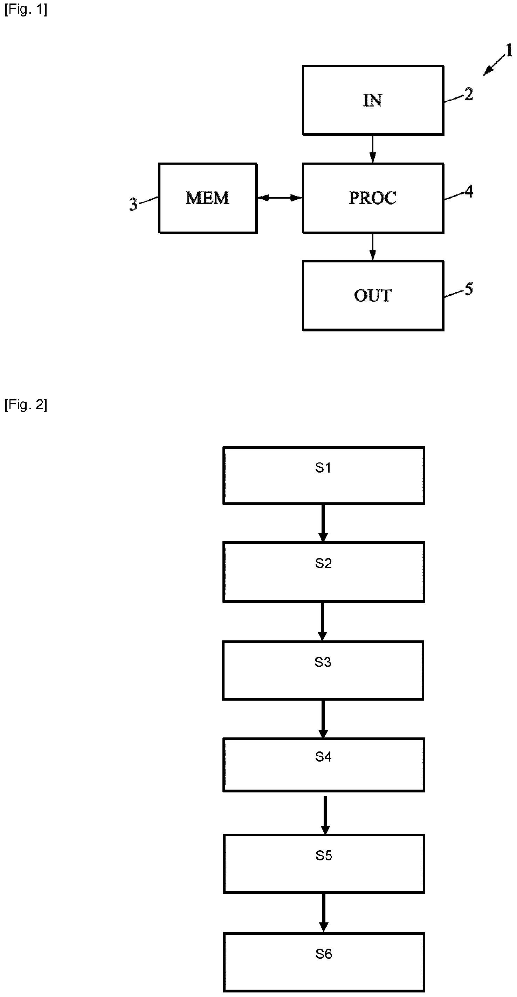

**Figure 1** schematically shows an example of a computer device 1 according to the present document.

Said computer device 1 comprises:
- an input interface 2 to receive medical images,
- a memory 3 for storing at least instructions of a computer program according to the present document,
- a processor 4 accessing the memory for reading the aforesaid instructions and executing then the method according to the present document,
- an output interface 5 to provide information concerning the comparison and the characterization of the anatomical lesions.

**Figure 2** is a flow chart illustrating the computer-implemented method for pairing anatomical entities of at least one patient on medical images, according to the present document.

The method comprises the following steps:
- obtaining (S1) at least a first medical image and a second medical image of an anatomical region of said patient, and
   for each medical image:
   ∘ segmenting (S2) at least one anatomical reference entity of said medical image to generate a first segmentation map,
   ∘ segmenting (S3) at least one anatomical target entity of said medical image to generate a second segmentation map,
   ∘ computing (S4) a feature tensor respectively based on the first and second segmentation maps,
- computing (S5) a similarity matrix between the feature tensor of said first medical image and the feature tensor of said second medical image,
- characterizing (S6) the correspondence between anatomical entities of said first and second medical images, based on the similarity matrix.

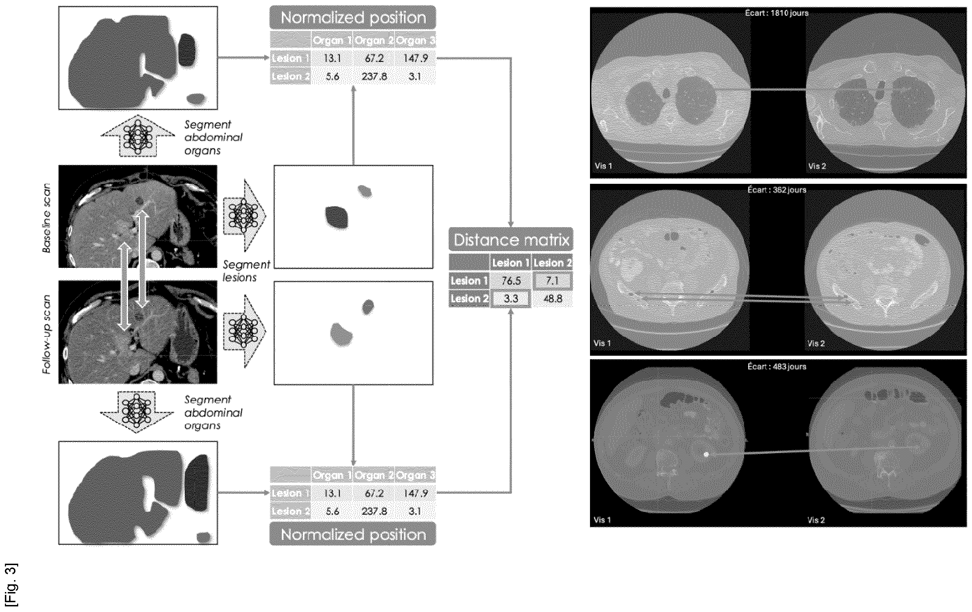

**Figure 3** illustrates a method for longitudinal lesion tracking in medical imaging, providing a visual representation of the segmentation, normalization, and matching processes involved in the proposed invention.

The top-left portion of the figure depicts the segmentation of abdominal organs. Using a deep learning model, such as U-Net or TotalSegmentator, key anatomical structures are extracted from medical scans. These structures include organs such as the liver, kidneys, and other abdominal landmarks. This segmentation is applied to scans from both a baseline visit (referred to as "Visit 1") and a follow-up visit ("Visit 2").

In the middle-left portion, the segmentation of lesions is shown. Lesions identified in each scan are segmented separately, generating distinct masks for each visit. These masks represent the regions of interest (ROls) that will later be analyzed and paired.

The right-hand side of the figure illustrates the normalized position of the lesions with respect to reference organs. A table lists the normalized distances of each lesion to the segmented organs. Normalization ensures that lesion positions are expressed consistently across different imaging sessions, accounting for anatomical variations and patient positioning discrepancies.

The central portion highlights the creation of a distance matrix. The matrix quantifies the distances between lesions segmented in the baseline visit and those in the follow-up visit. These distances form the basis for lesion matching, which ensures that corresponding lesions across visits are correctly paired for longitudinal analysis.

On the far-right, the figure demonstrates the final output of the lesion matching process. The computed matches are represented by lines connecting lesions between the two visits, overlaid on corresponding computed tomography (CT) slices. These paired lesions are visually annotated, showing changes in their spatial positions and sizes over time. The process is repeated across different slices and time intervals, with examples shown for time gaps of 1810 days, 362 days, and 483 days between visits.

This figure provides a comprehensive overview of the proposed method, detailing the following steps:
- Segmentation of organs and lesions: Identification and delineation of anatomical entities in baseline and follow-up scans.
- Normalization of lesion positions: Standardizing lesion coordinates relative to organ centroids to improve spatial consistency.
- Distance matrix computation: Quantifying inter-visit lesion differences to facilitate accurate matching.
- Lesion matching: Establishing correspondences between lesions in baseline and follow-up visits to track longitudinal changes.

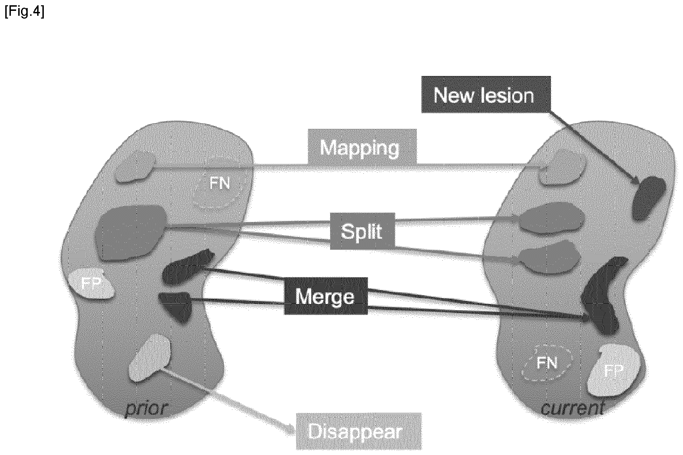

**Figure 4** illustrates the lesion correspondence analysis between two imaging time points, labeled as "prior" (baseline image) and "current" (follow-up image). This analysis enables accurate tracking and classification of lesion evolution, for longitudinal medical imaging studies. The figure demonstrates key steps in the process, including mapping lesions, detecting new and disappearing lesions, and addressing complex morphological changes such as splitting and merging.

On the left, the "prior" side represents segmented lesions and false positives identified during an earlier imaging session. Similarly, the "current" side on the right shows segmented lesions and false positives from a subsequent imaging session. Both sets of data are visualized within anatomical regions. The method begins with a mapping operation, indicated by lines, which identifies lesions that persist between the two time points. This operation ensures continuity in tracking lesions that have remained unchanged or undergone minor transformations.

Lesions newly identified in the current imaging session are labeled as "New Lesion." These represent pathological entities that were absent in the prior session, potentially signaling disease progression. Conversely, lesions marked as "Disappear" on the prior side indicate regions that are no longer visible in the current imaging session, likely due to treatment effects or natural resolution of the pathology.

To handle morphological changes, the method includes a splitting operation, representing cases where a single lesion in the prior session has divided into multiple lesions in the current session. This is contrasted with a merging operation, which identifies instances where multiple lesions from the prior session have combined into a single lesion in the current session. These steps ensure accurate tracking of dynamic lesion changes over time.

The figure also accounts for errors in lesion detection. False positives, representing incorrect identifications, and false negatives, indicating missed lesions, are highlighted and addressed to enhance the reliability of the analysis.

## Claims

1. A computer-implemented method for pairing anatomical entities of at least one patient on medical images, the method comprising:
- obtaining (S1) at least a first medical image and a second medical image of an anatomical region of said patient, and
for each medical image:
∘ segmenting (S2) at least one anatomical reference entity of said medical image to generate a first segmentation map,
∘ segmenting (S3) at least one anatomical target entity of said medical image to generate a second segmentation map,
∘ computing (S4) a feature tensor respectively based on the first and second segmentation maps,
- computing (S5) a similarity matrix between the feature tensor of said first medical image and the feature tensor of said second medical image,
- characterizing (S6) the correspondence between anatomical entities of said first and second medical images, based on the similarity matrix.

2. Computer-implemented method according to any of the preceding claims, wherein segmenting the anatomical reference entity and segmenting the anatomical lesion are performed using a U-net.

3. Computer-implemented method according to any of the preceding claims, wherein said medical images are Computed Tomography images.

4. Computer-implemented method according to any of the preceding claims, wherein the first image is a baseline image and the second image is a follow-up image.

5. Computer-implemented method according to any of the preceding claims, wherein the anatomical reference entity is an organ, a bone or an implant and the anatomical target entity is a lesion or a tumor.

6. Computer-implemented method according to any of the preceding claims, wherein each medical image is preprocessed to standardize voxel spacing, intensity normalization, or alignment across images, before segmenting said anatomical entities.

7. Computer-implemented method according to any of the preceding claims, wherein each anatomical target entity is localized by encoding its relative position with respect to a list of anatomical reference entities, before computing said feature tensor.

8. Computer-implemented method according to any of the preceding claims, wherein normalization is applied to adjust the similarity measures between feature tensors based on the average displacement of anatomical reference entities between images, before computing the similarity matrix.

9. Computer-implemented method according to any of the preceding claims, wherein the step of characterizing the correspondence between anatomical entities of said first and second medical images comprises performing lesion pairing optimization by solving a linear assignment problem using integer linear programming to establish correspondences between target entities in the first and second medical images.

10. Computer-implemented method according to any of the preceding claims, wherein the step of characterizing the correspondence between anatomical entities of said first and second medical images comprises validating the lesion pairings by assessing confidence levels, spatial consistency, or volumetric changes.

11. Computer-implemented method according to any of the preceding claims, wherein the first medical image is a medical image of a first patient and the second medical image is a medical image of a second patient.

12. A computer program product, comprising instructions which, when executed by a processor, cause the processor to implement the method according to any of the preceding claims.

13. A computer device (1) comprising:
- an input interface (2) to receive medical images,
- a memory (3) for storing at least instructions of a computer program according to the preceding claim,
- a processor (4) accessing the memory for reading the aforesaid instructions and executing then the method according to any of the claims 1 to 11,
- an output interface (5) to provide information concerning the comparison and the characterization of the anatomical lesions.
